# EUROPEAN PATENT SPECIFICATION

(11) **EP 4 050 767 B1**
(45) Date of publication and mention of the grant of the patent: **01.04.2026**
(21) Application number: 22158613.4
(22) Date of filing: 24.02.2022
(51) Int. Cl.: H02K 1/276

(54) **ROTOR AND IPM MOTOR INCLUDING THE SAME**
ROTOR UND IPM-MOTOR DAMIT
ROTOR ET MOTEUR IMP LE COMPRENANT

(30) Priority: 25.02.2021 JP 2021028242
(43) Date of publication of application: 31.08.2022
(73) Proprietor: Nidec Corporation, Kyoto-shi, Kyoto 601-8205 (JP)
(72) Inventor: SHIMIZU, Takeshi, Kyoto, 601-8205 (JP); AKATSUKA, Akira, Kyoto, 601-8205 (JP)
(74) Representative: Stöckeler, Ferdinand

(56) References cited:
- US-A1- 2020 212 737
- US-A1- 2020 235 619

## Description

### Technical Field

The present invention relates to a rotor and an IPM motor including the rotor.

### Background Art

A rotor for an IPM motor in which a rotor magnet is inserted in a magnet insertion hole extending in the axial direction of a rotor core is known. Additionally, a configuration for positioning the rotor magnet in the magnet insertion hole in the rotor is disclosed. For example, Patent Literature 1 discloses a rotor in which an adhesive sheet is interposed between a permanent magnet and a rotor core in a slit hole, and the adhesive sheet is expanded and cured to fix the permanent magnet in the slit hole.

US 2020/235619 A1 discloses a rotor core having magnet insertion slots and magnet pieces inserted into the slots. An insulating sheet is wound around the magnet pieces and comprises adhesive layers having foamability on both surfaces of a sheet layer.

US 2020/212737 A1 discloses a rotor core with a plurality of magnet insertion holes and a plurality of arc-shaped magnets inserted into the magnet insertion holes. A foam piece is attached to a circumferential central portion of an inner diameter surface of the permanent magnet and is provided between the permanent magnet and the magnet insertion hole.

### Citation List

### Patent Literature

Patent Literature 1: JP 2006-311782 A

### Summary of Invention

### Technical Problem

In the rotor disclosed in Patent Literature 1, the adhesive sheet interposed between the permanent magnet and the rotor core has one adhesive layer that expands by heating and a base material layer that holds the adhesive layer. In the rotor of Patent Literature 1, the adhesive layer is adhered to the permanent magnet. In the rotor, the base material layer, which is not an expanding member, is in contact with an inner surface of the slit hole of the rotor core. Accordingly, in the rotor of Patent Literature 1, the degree of adhesion of the adhesive sheet to the inner surface of the slit hole is not sufficient, and the positioning accuracy of the permanent magnet with respect to the rotor core may not be sufficient.

Hence, in a rotor in which a rotor magnet is inserted in a magnet insertion hole of a rotor core, there is a need for a configuration that allows the rotor magnet to be easily and accurately positioned in the magnet insertion hole.

An object of the present invention is to provide a rotor that allows a rotor magnet inserted in a magnet insertion hole of a rotor core to be easily and accurately positioned in the magnet insertion hole.

### Solution to Problem

A rotor according to an embodiment of the present invention is a rotor including a columnar rotor core that has a magnet insertion hole penetrating the rotor core in the axial direction, a rotor magnet inserted into the magnet insertion hole, and a positioning member that positions the rotor magnet in the magnet insertion hole. The positioning member includes a first foam layer containing an adhesive that adheres to the rotor magnet, a second foam layer in contact with the inner surface of the magnet insertion hole of the rotor core, and a base material layer located between the first foam layer and the second foam layer. The first foam layer, the second foam layer, and the base material layer are laminated and located between the rotor magnet and the inner surface of the magnet insertion hole. The second foam layer has no adhesive surface.

An IPM motor according to an embodiment of the present invention includes the rotor and a stator having a stator coil and a stator core.

### Advantageous Effects of Invention

According to the rotor of the embodiment of the present invention, the rotor magnet can be easily and accurately positioned in the magnet insertion hole of the rotor core.

### Brief Description of Drawings

Fig. 1 is a cross-sectional view showing a schematic configuration of an IPM motor according to an embodiment.
Fig. 2 is a plan view of a rotor.
Fig. 3 is a partially enlarged view of Fig. 2.
Fig. 4 is a cross-sectional view taken along line IV-IV in Fig. 3.
Fig. 5 is a diagram showing a schematic configuration of a positioning member before foaming.
Fig. 6A is a diagram illustrating a method of manufacturing the rotor according to the embodiment.
Fig. 6B is a diagram illustrating the method of manufacturing the rotor according to the embodiment.
Fig. 6C is a diagram illustrating the method of manufacturing the rotor according to the embodiment.
Fig. 7A is a diagram showing the position of a rotor magnet before heating.
Fig. 7B is a diagram showing the position of the rotor magnet after heating.

### Description of Embodiment

Hereinafter, an exemplary embodiment of the present invention will be described in detail with reference to the drawings. Note that the same or corresponding parts in the drawings are denoted by the same reference numerals, and the description thereof will not be repeated. The dimensions of constituent members in each drawing do not faithfully represent the actual dimensions of the constituent members, the dimensional ratio of each constituent member, or the like.

Note that in the following description of a motor 1, a direction parallel to a central axis P of a rotor 2 is referred to as "axial direction", a direction perpendicular to the central axis P is referred to as "radial direction", and a direction along a circular arc centered on the central axis P is referred to as "circumferential direction". Note, however, that the definitions of directions are not intended to limit the direction of the rotor 2 when in use. A "longitudinal direction" and "transverse direction" of a rotor magnet 22 and a magnet insertion hole 24 refer to the longitudinal direction and the transverse direction of the rotor magnet 22 and the magnet insertion hole 24 when the rotor 2 is viewed in the axial direction.

In the following description, the expression "fix", "connect", "attach", or the like (hereinafter, fix or the like) is used not only when members are directly fixed or the like to each other, but also when members are fixed or the like to each other with another member interposed therebetween. That is, in the following description, the expression "fix or the like" includes the meaning of direct and indirect fixation or the like of members.

### (Embodiment 1)

### (Configuration of motor)

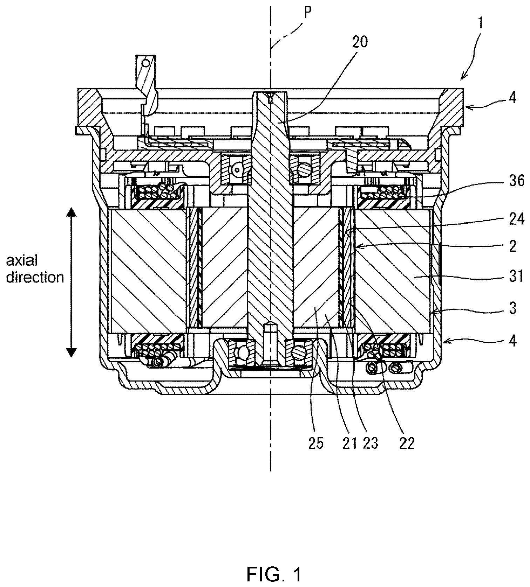

Fig. 1 shows a schematic configuration of a motor 1 which is an IPM motor having a rotor 2 of an exemplary embodiment of the present invention. The motor 1 includes a rotor 2, a stator 3, a housing 4, and a shaft 20. The rotor 2 is a rotor for an IPM motor in which a magnet is embedded in the rotor. The rotor 2 rotates about a central axis P with respect to the stator 3. In the present embodiment, the motor 1 is a so-called inner rotor motor in which the rotor 2 is located so as to be rotatable about the central axis P in the tubular stator 3.

The rotor 2 includes a rotor core 21, a rotor magnet 22, and a positioning member 23. The rotor 2 is located radially inward of the stator 3 and is rotatable with respect to the stator 3.

The rotor core 21 has a columnar shape extending along the central axis P. The shaft 20 extending along the central axis P is fixed to and penetrates the rotor core 21 in the axial direction. As a result, the rotor core 21 rotates with the shaft 20.

The rotor core 21 is formed by laminating multiple disk-shaped rotor core plates 25 in the thickness direction. The multiple core plates 25 are made of electromagnetic steel plates.

The rotor core 21 has a magnet insertion hole 24 that axially penetrates multiple core plates 25 laminated in the thickness direction. The magnet insertion hole 24 has a rectangular shape, for example, when the rotor core 21 is viewed in the axial direction. Each of the multiple core plates 25 has a through hole 26 forming the magnet insertion hole 24.

The rotor magnet 22 has a rectangular parallelepiped shape extending in the axial direction. That is, the rotor magnet 22 has a rectangular shape when the rotor core 21 is viewed in the axial direction. The axial length of the rotor magnet 22 is equal to or slightly shorter than the axial length of the rotor core 21. The rotor magnet 22 is positioned at a predetermined position by the positioning member 23 while being housed in the magnet insertion hole 24.

In the following, for the sake of explanation, when the rotor magnet 22 is viewed in the axial direction, a surface forming the long side of the rotor magnet 22 is referred to as a long side lateral face of the rotor magnet 22, and a surface forming the short side of the rotor magnet 22 is referred to as a short side lateral face of the rotor magnet 22. A detailed description of the positioning member 23 will be given later.

The stator 3 is housed in the housing 4. In the present embodiment, the stator 3 has a tubular shape. The rotor 2 is located radially inward of the stator 3. That is, the stator 3 is located so as to face the rotor 2 in the radial direction. The rotor 2 is located radially inward of the stator 3 so as to be rotatable about the central axis P.

The stator 3 includes a stator core 31 and a stator coil 36. The stator core 31 has a cylindrical shape extending in the axial direction. The stator coil 36 is wound around the stator core 31. The stator 3 has a configuration similar to that of a general stator. Hence, a detailed description of the stator 3 will be omitted.

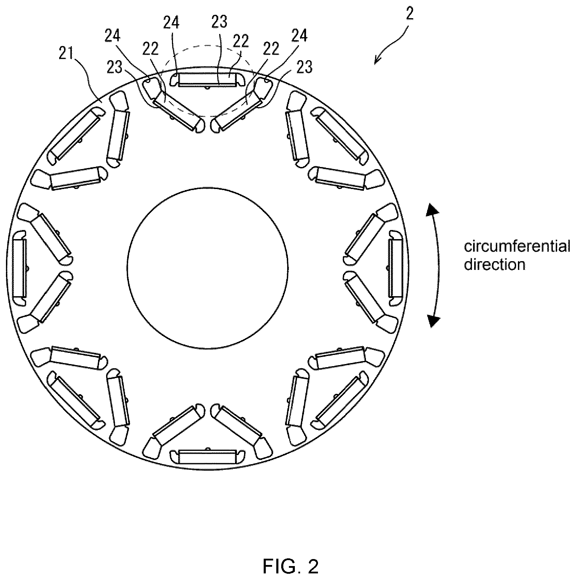

Next, the rotor 2 will be described in detail with reference to Figs. 2 to 4.

Fig. 2 is a diagram of the rotor 2 as viewed in the axial direction. As shown in Fig. 2, in the present embodiment, the rotor core 21 has 24 magnet insertion holes 24. A rotor magnet 22 is housed in each of the 24 magnet insertion holes 24. Note that while there are 24 magnet insertion holes 24 in the present embodiment, the number of magnet insertion holes 24 does not necessarily have to be 24.

The longitudinal direction of 16 magnet insertion holes 24 out of the 24 magnet insertion holes 24 is inclined with respect to a radial line extending in the radial direction of the rotor 2. The longitudinal direction of eight magnet insertion holes 24 out of the 24 magnet insertion holes 24 is orthogonal to the radial line. As described above, in the present embodiment, none of the longitudinal directions of the magnet insertion holes 24 coincide with the radial line. Hence, in all the magnet insertion holes 24, a pair of surfaces forming the long sides when viewed in the axial direction, among surfaces forming the inner surface of the magnet insertion hole 24 has one surface located more inward than the other surface in the radial direction of the rotor core 21. In the following description, of the pair of surfaces, the surface located radially inward is referred to as an insertion hole inner surface 24a, and the surface located radially outward is referred to as an insertion hole outer surface 24b. Note that the positions and longitudinal directions of the magnet insertion holes 24 do not necessarily have to be the positions and longitudinal directions shown in Fig. 2.

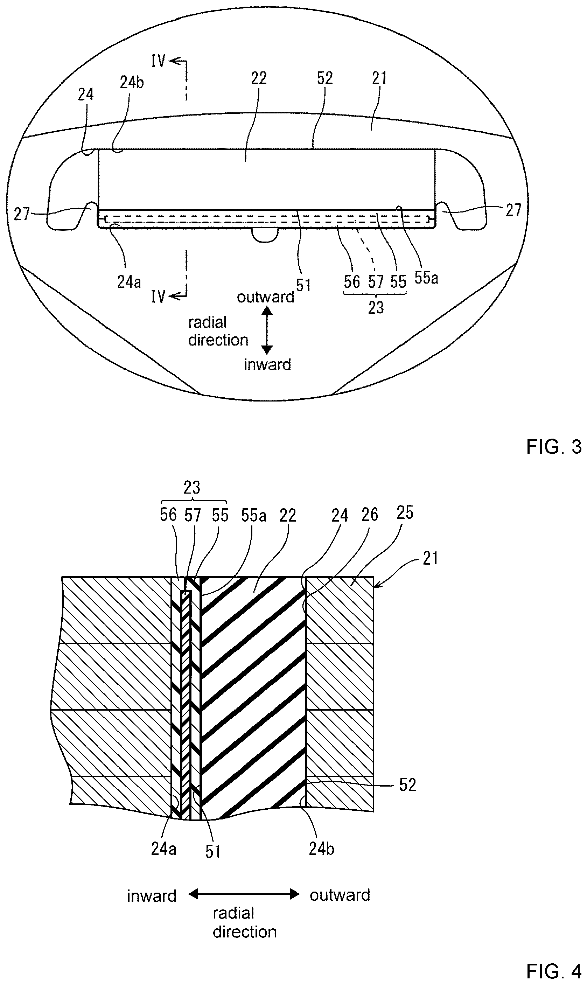

Fig. 3 is an enlarged view of a part surrounded by a broken line in Fig. 2. As shown in Fig. 3, in the rotor magnet 22 inserted in the magnet insertion hole 24, one of the pair of long side lateral faces is located more inward than the other, in the radial direction of the rotor core 21. In the following description, of the pair of long side lateral faces, the surface located radially inward is referred to as a magnet inner surface 51, and the surface located radially outward is referred to as a magnet outer surface 52. When the rotor magnet 22 is inserted in the magnet insertion hole 24, the magnet outer surface 52 faces the insertion hole outer surface 24b of the magnet insertion hole 24. The positioning member 23, which will be described later, is located between the magnet inner surface 51 and the insertion hole inner surface 24a of the magnet insertion hole 24.

The rotor core 21 has, on the insertion hole inner surface 24a, a pair of protrusions 27 protruding into the magnet insertion hole 24. When the rotor magnet 22 is housed in the magnet insertion hole 24, one of the pair of protrusions 27 faces one short side of the rotor magnet 22, and the other of the protrusions 27 faces the other short side of the rotor magnet 22. That is, the pair of protrusions 27 restrict the rotor magnet 22 from moving in the longitudinal direction in the magnet insertion hole 24.

The positioning member 23 is formed of a member that foams by heating. The positioning member 23 is located between the magnet inner surface 51 of the rotor magnet 22 and the insertion hole inner surface 24a of the magnet insertion hole 24. When the positioning member 23 is expanded by foaming, the positioning member 23 fills a gap between the rotor magnet 22 and the inner surface of the magnet insertion hole 24 in the magnet insertion hole 24.

Fig. 4 is a cross-sectional view taken along line IV-IV in Fig. 3. As shown in Figs. 3 and 4, the positioning member 23 is configured by laminating sheet-like members. In the positioning member 23, a magnet-side foam layer 55, a base material layer 57, and a rotor core-side foam layer 56 are laminated in this order from the side in contact with the rotor magnet 22. The magnet-side foam layer 55 corresponds to a first foam layer. The rotor core-side foam layer 56 corresponds to a second foam layer.

The magnet-side foam layer 55 contains a thermosetting resin and a foaming agent foamed by heating. As the foaming agent, microcapsules containing a low melting point organic solvent such as alcohol are often used. The thermosetting resin is preferably composed of a thermosetting adhesive. Examples of the thermosetting adhesive include a phenol-based adhesive, a urethane-based adhesive, and an epoxy-based adhesive. Among the above adhesives, it is more preferable to use an epoxy-based adhesive having excellent adhesive strength, chemical resistance, and the like. Note that if an adhesive other than the epoxy-based adhesive is used as the thermosetting resin, curing failure may occur.

The magnet-side foam layer 55 has an adhesive surface 55a on one surface. The magnet-side foam layer 55 is adhered to the magnet inner surface 51 of the rotor magnet 22 by the adhesive surface 55a. The magnet-side foam layer 55 is located between the rotor magnet 22 and the base material layer 57 in a cured state after foaming.

The rotor core-side foam layer 56 is composed of a member similar to that of the magnet-side foam layer 55. The rotor core-side foam layer 56 has no adhesive surface. The rotor core-side foam layer 56 is in contact with the inner surface of the magnet insertion hole 24. The rotor core-side foam layer 56 is located between the inner surface of the magnet insertion hole 24 and the base material layer 57 in a cured state after foaming.

The base material layer 57 is a member composed of resin. Examples of the resin include polyethylene terephthalate (PET), polyphenylene sulfide (PSS), polyethylene naphthalate (PEN), and polyimide (PI).

The base material layer 57 is located between the magnet-side foam layer 55 and the rotor core-side foam layer 56 in the laminating direction of the positioning member 23. The base material layer 57 holds the magnet-side foam layer 55 and the rotor core-side foam layer 56. When the positioning member 23 is viewed in the axial direction, in the longitudinal direction of the rotor magnet 22, one end of the base material layer 57 is located more inward of the rotor magnet 22 than one end of the rotor magnet 22, and the other end of the base material layer 57 is located more inward of the rotor magnet 22 than the other end of the rotor magnet 22.

The positioning member 23 presses the rotor magnet 22 outward in the radial direction of the rotor core 21 in the magnet insertion hole 24 of the rotor core 21. As a result, the rotor magnet 22 is positioned at a predetermined position in the radial direction of the rotor core 21 in the magnet insertion hole 24 of the rotor core 21.

As described above, the pair of protrusions 27 and the positioning member 23 position the rotor magnet 22 at a predetermined position in the magnet insertion hole 24.

In the present embodiment, the positioning member 23 is located only radially inward of the rotor magnet 22 in the radial direction of the rotor 2.

When the rotor 2 rotates, centrifugal force is generated in the rotor magnet 22. At this time, if the positioning member 23 is located outward of the rotor magnet 22 in the radial direction of the rotor 2, the positioning member 23 is compressed by the centrifugal force generated in the rotor magnet 22, so that the positioning member 23 may deteriorate. On the other hand, in the present embodiment, the positioning member 23 is located only inward of the rotor magnet 22 in the radial direction of the rotor 2. As a result, even if centrifugal force is generated in the rotor magnet 22, the positioning member 23 is not compressed by the rotor magnet 22. Hence, it is possible to prevent the positioning member 23 from deteriorating due to the centrifugal force generated in the rotor magnet 22. Accordingly, it is possible to prevent lowering of the holding force of the positioning member 23 holding the rotor magnet 22. As a result, the rotor magnet 22 can be accurately positioned at a predetermined position in the magnet insertion hole 24.

In the present embodiment, the rotor magnet 22 has a rectangular shape when the rotor magnet 22 is viewed in the axial direction, and the rotor core 21 has the pair of protrusions 27 on the inner surface of the magnet insertion hole 24 when the rotor core 21 is viewed in the axial direction. When the rotor magnet 22 is inserted in the magnet insertion hole 24, one of the pair of protrusions 27 faces the short side of the rotor magnet 22 located at one end in the longitudinal direction, and the other of the protrusions 27 faces the short side of the rotor magnet 22 located at the other end in the longitudinal direction. When the positioning member 23 is viewed in the axial direction, the positioning member 23 is located only between the long side of the rotor magnet 22 and the inner surface of the magnet insertion hole 24.

As a result, the pair of protrusions 27 located on the inner surface of the magnet insertion hole 24 of the rotor core 21 can determine the position of the rotor magnet 22 with respect to the magnet insertion hole 24 in the longitudinal direction.

Additionally, the positioning member 23 can determine the position of the rotor magnet 22 with respect to the magnet insertion hole 24 in the transverse direction. As a result, the rotor magnet 22 can be easily positioned in the magnet insertion hole 24.

Additionally, the pair of protrusions 27 are located on both sides of the positioning member **23,** and when the positioning member 23 is viewed in the axial direction, in the longitudinal direction of the rotor magnet 22, one end of the base material layer 57 of the positioning member 23 is located more inward of the rotor magnet 22 than one end of the rotor magnet 22, and the other end of the base material layer 57 is located more inward of the rotor magnet 22 than the other end of the rotor magnet 22.

As described above, by making the base material layer 57 of the positioning member 23 shorter than the length of the long side of the rotor magnet 22 in the longitudinal direction of the rotor magnet 22, it is possible to prevent the foamed magnet-side foam layer 55 and rotor core-side foam layer 56 from interfering with the pair of protrusions 27 that determine the position of the rotor magnet 22 in the longitudinal direction. As a result, the rotor magnet 22 can be positioned more accurately in the longitudinal direction of the rotor magnet 22 in the magnet insertion hole 24.

### (Rotor manufacturing method)

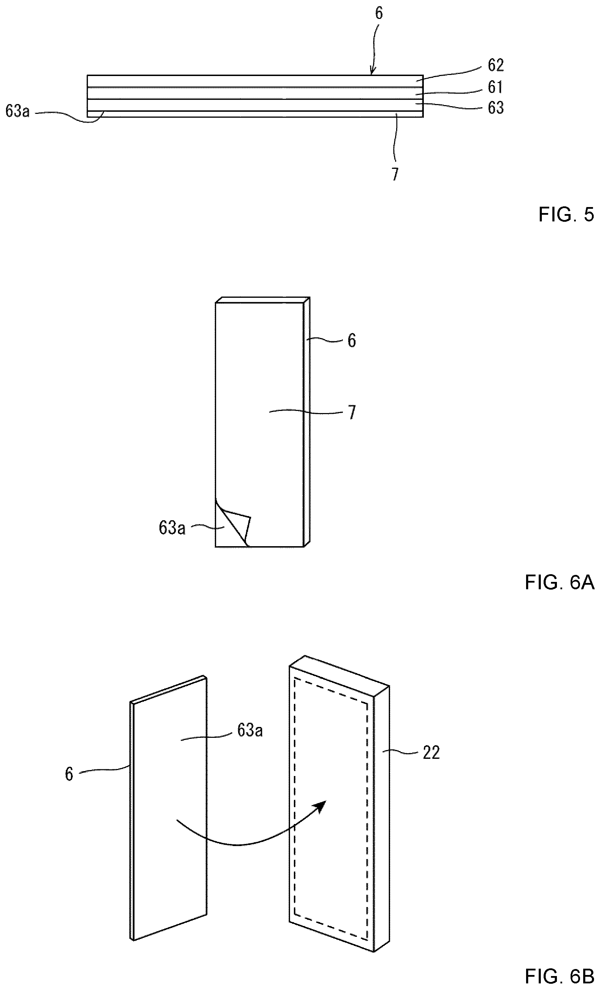

Next, a method of manufacturing the rotor 2 having the above configuration will be described with reference to Figs. 5 to 7.

A process of manufacturing the rotor 2 includes an adhesion step S1 of adhering a positioning sheet 6 to the rotor magnet 22, an insertion step S2 of inserting the rotor magnet 22 to which the positioning sheet 6 is adhered into the magnet insertion hole 24 of the rotor core 21, and a heating step S3 of heating the rotor core 21 with the rotor magnet 22 inserted in the magnet insertion hole 24.

Fig. 5 is a diagram showing a schematic configuration of the positioning sheet 6. The positioning sheet 6 is a member that functions as the positioning member 23 by foaming. As shown in Fig. 5, in the positioning sheet 6, a base material sheet 61, a rotor core-side foam sheet 62, and a magnet-side foam sheet 63 having the same size are laminated in the thickness direction. The rotor core-side foam sheet 62 changes into the rotor core-side foam layer 56 by foaming. The magnet-side foam sheet 63 changes into the magnet-side foam layer 55 by foaming. The base material sheet 61 is the base material layer 57 of the positioning member 23. The rotor core-side foam sheet 62, the base material sheet 61, and the magnet-side foam sheet 63 are laminated in this order. A surface of the magnet-side foam sheet 63 opposite to the base material sheet 61 side is an adhesive surface 63a. The adhesive surface 63a is covered with an adhesive surface cover 7. Note that the positioning sheet 6 and the adhesive surface cover 7 may be cut to a predetermined size after laminating the rotor core-side foam sheet 62, the base material sheet 61, the magnet-side foam sheet 63, and the adhesive surface cover 7.

The dimension of the positioning sheet 6 is smaller than the dimension of the long side lateral face of the rotor magnet 22. The thickness of the positioning sheet 6 is smaller than the gap between the long side lateral face of the rotor magnet 22 and the inner surface of the magnet insertion hole 24 when the rotor magnet 22 is inserted in the magnet insertion hole 24.

In the adhesion step S1, the positioning sheet 6 is adhered to the rotor magnet 22. Specifically, as shown in Fig. 6A, the adhesive surface cover 7 is removed from the positioning sheet 6 to expose the adhesive surface 63a. Thereafter, as shown in Fig. 6B, the adhesive surface 63a is adhered to the center of the magnet inner surface 51 of the rotor magnet 22. That is, when the positioning sheet 6 is adhered to the magnet inner surface 51, the magnet inner surface 51 has an outer peripheral part where the positioning sheet 6 is not adhered.

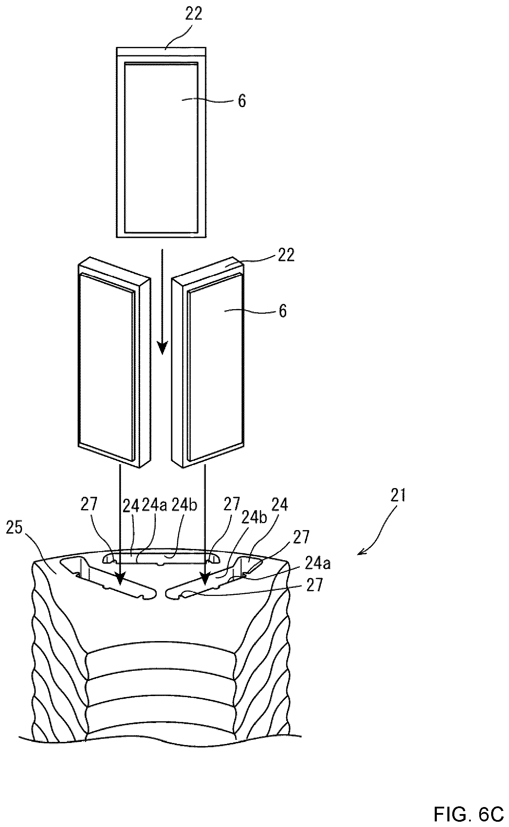

In the insertion step S2, the rotor magnet 22 to which the positioning sheet 6 is adhered is inserted into the magnet insertion hole 24 of the rotor core 21. Specifically, as shown in Fig. 6C, the rotor magnet 22 is inserted between the pair of protrusions 27 in the magnet insertion hole 24 of the rotor core 21 in a state where the surface of the rotor magnet 22 to which the positioning sheet 6 is adhered faces inward in the radial direction of the rotor core 21. When the positioning sheet 6 is adhered, the thickness direction dimension of the rotor magnet 22 is smaller than the dimension between the insertion hole inner surface 24a and the insertion hole outer surface 24b of the magnet insertion hole 24. Hence, the rotor magnet 22 to which the positioning sheet 6 is adhered can be easily inserted into the magnet insertion hole 24.

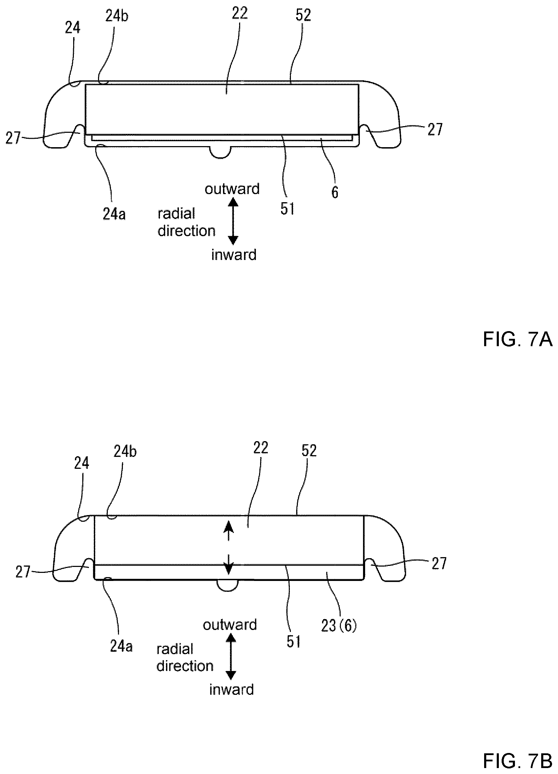

Fig. 7A is an axial view of the magnet insertion hole 24 and the rotor magnet 22 after inserting the rotor magnet 22. As shown in Fig. 7A, the pair of protrusions 27 determine the position of the rotor magnet 22 in the longitudinal direction. That is, the position of the rotor magnet 22 in the longitudinal direction is determined. On the other hand, a gap is formed between the rotor magnet 22 and positioning sheet 6 and the inner surface of the magnet insertion hole 24.

In the heating step S3, the rotor core 21 is heated with the rotor magnet 22 inserted in the magnet insertion hole 24. Fig. 7B is an axial view of the magnet insertion hole 24 and the rotor magnet 22 after heating. By heating, the positioning sheet 6 expands between the magnet inner surface 51 of the rotor magnet 22 and the insertion hole inner surface 24a of the magnet insertion hole 24. That is, the rotor magnet 22 is pushed radially outward in the magnet insertion hole 24 by the positioning member 23 which is the positioning sheet 6 after foaming. As a result, the rotor magnet 22 is positioned at a predetermined position in the radial direction in the magnet insertion hole 24.

By manufacturing the rotor 2 according to the above-mentioned method, it is possible to obtain the rotor 2 in which the rotor magnet 22 can be easily and accurately positioned at a predetermined position in the magnet insertion hole 24.

As described above, the rotor 2 according to the present embodiment has the columnar rotor core 21 that has the magnet insertion hole 24 penetrating the rotor core 21 in the axial direction, the rotor magnet 22 inserted into the magnet insertion hole 24, and the positioning member 23 that positions the rotor magnet 22 in the magnet insertion hole 24. The positioning member 23 includes the magnet-side foam layer 55 containing an adhesive that adheres to the rotor magnet 22, the rotor core-side foam layer 56 that is in contact with the inner surface of the magnet insertion hole 24 of the rotor core 21, and the base material layer 57 that is located between the magnet-side foam layer 55 and the rotor core-side foam layer 56. The magnet-side foam layer 55, the rotor core-side foam layer 56, and the base material layer 57 are laminated and located between the rotor magnet 22 and the inner surface of the magnet insertion hole 24.

In the above configuration, the magnet-side foam layer 55 and the rotor core-side foam layer 56 of the positioning member 23 are both located between the rotor magnet 22 and the inner surface of the magnet insertion hole 24 in a foamed state. That is, the magnet-side foam layer 55 and the rotor core-side foam layer 56 are located between the rotor magnet 22 and the inner surface of the magnet insertion hole 24 in a state of being expanded in the thickness direction by foaming.

The magnet-side foam layer 55 is adhered to the rotor magnet 22. The rotor core-side foam layer 56 is in contact with the inner surface of the magnet insertion hole 24. As a result, the positioning member 23 can be brought into close contact with the inner surface of the magnet insertion hole 24 while being adhered to the rotor magnet 22. Accordingly, the positioning member 23 can easily position the rotor magnet 22 with respect to the magnet insertion hole 24 of the rotor core 21 at a predetermined position in the radial direction.

Additionally, in the above configuration, since the positioning member 23 has multiple foam layers, the volume to be foamed can be increased as compared with a configuration in which the positioning member 23 has one foam layer. As a result, the positioning member 23 can push the rotor magnet 22 more strongly against the inner surface of the magnet insertion hole 24. Hence, the positioning member 23 can more accurately position the rotor magnet 22 with respect to the magnet insertion hole 24 of the rotor core 21.

Additionally, the rotor 2 is obtained by inserting the rotor magnet 22 to which the positioning sheet 6 having multiple foam layers is adhered into the magnet insertion hole 24 of the rotor core 21, and foaming the foam layers of the positioning sheet 6, for example. Specifically, the positioning sheet 6 having multiple foam layers that function as the magnet-side foam layer 55 and the rotor core-side foam layer 56 by foaming is adhered to the rotor magnet 22, the rotor magnet 22 and the positioning sheet 6 are inserted into the magnet insertion hole 24, and then the multiple foam layers of the positioning sheet 6 are foamed. By foaming the positioning sheet 6, it is possible to obtain the positioning member 23 that is brought into close contact with the inner surface of the magnet insertion hole 24 while being adhered to the rotor magnet 22. Accordingly, in the rotor 2, the rotor magnet 22 can be easily positioned in the magnet insertion hole 24. Hence, it is possible to provide the rotor 2 in which the rotor magnet 22 can be easily and accurately positioned in the magnet insertion hole 24 of the rotor core 21.

In the present embodiment, the rotor core 21 has the multiple core plates 25 that have the through hole 26 and are laminated in the thickness direction, and the magnet insertion hole 24 that is formed by the through holes 26 of the multiple core plates 25 in a state where the multiple core plates 25 are laminated.

When the rotor core 21 has multiple core plates 25 laminated in the thickness direction, the inner surface of the magnet insertion hole 24 is formed of the inner edges of the through holes 26 of the multiple core plates 25. The multiple core plates 25 have tolerances. Accordingly, the inner surface of the magnet insertion hole 24 formed by laminating the multiple core plates 25 has irregularities due to the tolerance. The base material layer 57 of the positioning member 23 does not expand along the irregularities of the inner surface of the magnet insertion hole. Hence, in a configuration in which the base material layer is in contact with the inner surface of the magnet insertion hole, the degree of adhesion of the positioning member to the inner surface of the magnet insertion hole is not sufficient. On the other hand, in the configuration in which the rotor core-side foam layer 56 is in contact with the inner surface of the magnet insertion hole 24 as described above, the rotor core-side foam layer 56 of the positioning member 23 expands along the irregularities of the inner surface of the magnet insertion hole 24. Hence, the positioning member 23 can more reliably hold the rotor magnet 22 in the magnet insertion hole 24.

The motor 1 according to the present embodiment includes the rotor 2 having the above-described configuration and the stator 3 having the stator coil 36 and the stator core 31.

The positioning member 23 can provide the motor 1 having the rotor 2 capable of easily and accurately positioning the rotor magnet 22 in the magnet insertion hole 24.

### (Other embodiments)

While the embodiment of the present invention has been described above, the above embodiment is merely an example for implementing the present invention. Hence, the present invention is not limited to the embodiment described above, and the embodiment described above may be appropriately modified and implemented without departing from the scope of the present invention.

In the embodiment, the rotor core 21 has the pair of protrusions 27. However, the rotor core does not necessarily have to have a pair of protrusions.

In the above embodiment, the rotor core 21 has the pair of protrusions 27 protruding into the magnet insertion hole 24 on the insertion hole inner surface 24a. However, the rotor core may have a pair of protrusions at other positions on the inner surface of the magnet insertion hole.

In the above embodiment, the positioning member 23 is located between the magnet inner surface 51 of the rotor magnet 22 and the insertion hole inner surface 24a of the magnet insertion hole 24. However, the positioning member may be located anywhere between the rotor magnet and the inner surface of the magnet insertion hole. The positioning member may be located between the magnet outer surface of the rotor magnet and the insertion hole outer surface. The positioning member may be located between the short side lateral face of the rotor magnet and the inner surface of the magnet insertion hole.

In the above embodiment, the dimension of the base material layer 57 of the positioning member 23 is smaller than the dimension of the long side lateral face of the rotor magnet 22. However, the dimension of the base material layer of the positioning member may be the same as the dimension of the long side lateral face of the rotor magnet.

In the above embodiment, the dimension of the positioning sheet 6 is smaller than the dimension of the long side lateral face of the rotor magnet 22. However, the dimension of the positioning sheet may be the same as the dimension of the long side lateral face of the rotor magnet.

### Industrial Applicability

The present invention can be used for a rotor of an IPM motor.

### Reference Signs List

- 1: motor (IPM motor)
- 2: rotor
- 3: stator
- 4: housing
- 6: positioning sheet
- 7: adhesive surface cover
- 20: shaft
- 21: rotor core
- 22: rotor magnet
- 23: positioning member
- 24: magnet insertion hole
- 24a: insertion hole inner surface
- 24b: insertion hole outer surface
- 25: core plate
- 26: through hole
- 27: pair of protrusions
- 31: stator core
- 36: stator coil
- 51: magnet inner surface
- 52: magnet outer surface
- 55: magnet-side foam layer (first foam layer)
- 55a: adhesive surface
- 56: rotor core-side foam layer (second foam layer)
- 57: base material layer
- 61: base material sheet
- 62: rotor core-side foam sheet
- 63: magnet-side foam sheet
- 63a: adhesive surface
- P: central axis

## Claims

1. A rotor (2) comprising:
a columnar rotor core (21) that has a magnet insertion hole (24) penetrating the rotor core (21) in an axial direction;
a rotor magnet (22) inserted into the magnet insertion hole (24); and
a positioning member (23) that positions the rotor magnet (22) in the magnet insertion hole (24),
wherein:
the positioning member (23) includes
a first foam layer (55) containing an adhesive (55a) that adheres to the rotor magnet (22),
a second foam layer (56) in contact with an inner surface of the magnet insertion hole (24) of the rotor core (21), and
a base material layer (57) located between the first foam layer (55) and the second foam layer (56); and
the first foam layer (55), the second foam layer (56), and the base material layer (57) are laminated and located between the rotor magnet (22) and the inner surface of the magnet insertion hole (24),
**characterized in that** the second foam layer (56) has no adhesive surface.

2. The rotor (2) according to claim 1, **characterized in that**
the rotor core (21) includes a plurality of core plates (25) that have a through hole (26) and are laminated in a thickness direction, and a magnet insertion hole (24) that is formed by the through holes (26) of the plurality of core plates (25) in a state where the plurality of core plates (25) are laminated.

3. The rotor (2) according to any one of claims 1 and 2, **characterized in that**
the positioning member (23) is located only radially inward of the rotor magnet (22) in a radial direction of the rotor (2).

4. The rotor (2) according to any one of claims 1 to 3, **characterized in that**:
the rotor magnet (22) has a rectangular shape when the rotor magnet (22) is viewed in the axial direction,
the rotor core (21) has a pair of protrusions (27) on the inner surface of the magnet insertion hole (24) when the rotor core (21) is viewed in the axial direction,
when the rotor magnet (22) is inserted in the magnet insertion hole (24), one of the pair of protrusions (27) faces a short side of the rotor magnet (22) located at one end in a longitudinal direction, and the other of the protrusions (27) faces a short side of the rotor magnet (22) located at the other end in the longitudinal direction, and
the positioning member (23) is located only between the long side of the rotor magnet (22) and the inner surface of the magnet insertion hole (24) when the positioning member (23) is viewed in the axial direction.

5. The rotor (2) according to claim 4, **characterized in that**:
the pair of protrusions (27) are located on both sides of the positioning member (23), and
when the positioning member (23) is viewed in the axial direction, in the longitudinal direction of the rotor magnet (22), one end of the base material layer (57) of the positioning member (23) is located more inward of the rotor magnet (22) than one end of the rotor magnet (22), and the other end of the base material layer (57) of the positioning member (23) is located more inward of the rotor magnet (22) than the other end of the rotor magnet (22).

6. An IPM motor (1) **characterized by** comprising
the rotor (2) according to any one of claims 1 to 5; and
a stator (3) having a stator coil (36) and a stator core (31).

## Patentansprüche

1. Ein Rotor (2), der folgende Merkmale aufweist:
einen säulenförmigen Rotorkern (21), der ein Magneteinführungsloch (24) aufweist, das den Rotorkern (21) in einer Axialrichtung durchdringt;
einen Rotormagnet (22), der in das Magneteinführungsloch (24) eingeführt wird; und
ein Positionierungselement (23), das den Rotormagnet (22) in dem Magneteinführungsloch (24) positioniert.
wobei:
das Positionierungselement (23) folgende Merkmale umfasst:
eine erste Schaumschicht (55), die ein Haftmittel (55a) enthält, welches an dem Rotormagnet (22) anhaftet,
eine zweite Schaumschicht (56), die mit einer Innenoberfläche des Magneteinführungslochs (24) des Rotorkerns (21) in Kontakt steht, und
eine Basismaterialschicht (57), die sich zwischen der ersten Schaumschicht (55) und der zweiten Schaumschicht (56) befindet; und
die erste Schaumschicht (55), die zweite Schaumschicht (56) und die Basismaterialschicht (57) laminiert sind und sich zwischen dem Rotormagnet (22) und der Innenoberfläche des Magneteinführungslochs (24) befinden,
**gekennzeichnet dadurch, dass** die zweite Schaumschicht (56) keine Haftoberfläche aufweist.

2. Der Rotor (2) gemäß Anspruch 1, **dadurch gekennzeichnet, dass** der Rotorkern (21) eine Mehrzahl von Kernplatten (25), die ein Durchgangsloch (26) aufweisen und in einer Dickenrichtung laminiert sind, und ein Magneteinführungsloch (24) umfasst, das in einem Zustand, in dem die Mehrzahl von Kernplatten (25) laminiert ist, durch die Durchgangslöcher (26) der Mehrzahl von Kernplatten (25) gebildet wird.

3. Der Rotor (2) gemäß einem der Ansprüche 1 und 2, ferner **dadurch gekennzeichnet, dass**
sich das Positionierungselement (23) in einer Radialrichtung des Rotors (2) nur radial innen in Bezug auf den Rotormagnet (22) befindet.

4. Der Rotor (2) gemäß einem der Ansprüche 1 bis 3, **dadurch gekennzeichnet, dass**
der Rotormagnet (22) eine rechteckige Form aufweist, wenn der Rotormagnet (22) in der Axialrichtung betrachtet wird,
der Rotorkern (21) ein Paar Vorsprünge (27) an der Innenoberfläche des Magneteinführungslochs (24) aufweist, wenn der Rotorkern (21) in der Axialrichtung betrachtet wird,
wenn der Rotormagnet (22) in das Magneteinführungsloch (24) eingeführt wird, einer des Paars von Vorsprüngen (27) einer kurzen Seite des Rotormagneten (22) zugewandt ist, die sich an einem Ende in einer Längsrichtung befindet, und der andere der Vorsprünge (27) einer kurzen Seite des Rotormagnets (22) zugewandt ist, die sich an dem anderen Ende in der Längsrichtung befindet, und
sich das Positionierungselement (23) lediglich zwischen der langen Seite des Rotormagneten (22) und der Innenoberfläche des Magneteinführungslochs (24) befindet, wenn das Positionierungselement (23) in der Axialrichtung betrachtet wird.

5. Der Rotor (2) gemäß Anspruch 4, **dadurch gekennzeichnet, dass**
sich das Paar Vorsprünge (27) an beiden Seiten des Positionierungselements (23) befindet, und
wenn das Positionierungselement (23) in der Axialrichtung betrachtet wird, sich ein Ende der Basismaterialschicht (57) des Positionierungselements (23) in der Längsrichtung des Rotormagneten (22) in Bezug auf den Rotormagnet (22) weiter innen als ein Ende des Rotormagneten (22) befindet und sich das andere Ende der Basismaterialschicht (57) des Positionierungselements (23) in Bezug auf den Rotormagnet (22) weiter innen als das andere Ende des Rotormagneten (22) befindet.

6. Ein IPM-Motor (1), der **dadurch gekennzeichnet ist, dass** derselbe folgende Merkmale aufweist:
den Rotor (2) gemäß einem der Ansprüche 1 bis 5; und
einen Stator (3) mit einer Statorspule (36) und einem Statorkern (31).

## Revendications

1. Rotor (2) comprenant :
un noyau de rotor cylindrique (21) comprenant un trou d'insertion d'aimant (24) traversant le noyau de rotor (21) dans le sens axial ;
un aimant de rotor (22) inséré dans le trou d'insertion d'aimant (24); et
un élément de positionnement (23) qui positionne l'aimant de rotor (22) dans le trou d'insertion d'aimant (24),
dans lequel :
l'élément de positionnement (23) inclut
une première couche de mousse (55) contenant un adhésif (55a) qui adhère à l'aimant du rotor (22),
une deuxième couche de mousse (56) en contact avec une surface intérieure du trou d'insertion d'aimant (24) du noyau de rotor (21), et
une couche de matériau de base (57) située entre la première couche de mousse (55) et la deuxième couche de mousse (56) ; et
la première couche de mousse (55), la deuxième couche de mousse (56) et la couche de matériau de base (57) sont stratifiées et situées entre l'aimant du rotor (22) et la surface intérieure du trou d'insertion d'aimant (24),
**caractérisé en ce que** la deuxième couche de mousse (56) ne présente aucune surface adhésive.

2. Rotor (2) selon la revendication 1, **caractérisé en ce que**
le noyau du rotor (21) inclut une pluralité de plaques de noyau (25) comprenant un trou traversant (26) et étant stratifiées dans un sens de l'épaisseur, et un trou d'insertion d'aimant (24) qui est formé par les trous traversants (26) de la pluralité de plaques de noyau (25) dans un état où la pluralité de plaques de noyau (25) sont stratifiées.

3. Rotor (2) selon l'une quelconque des revendications 1 et 2, **caractérisé en ce que**
l'élément de positionnement (23) est situé, dans une direction radiale du rotor (2), uniquement radialement vers l'intérieur par rapport à l'aimant du rotor (22).

4. Rotor (2) selon l'une quelconque des revendications 1 à 3, **caractérisé en ce que** :
l'aimant du rotor (22) comprend une forme rectangulaire lorsque l'aimant du rotor (22) est vu dans la direction axiale,
le noyau du rotor (21) comprend une paire de saillies (27) à la surface intérieure du trou d'insertion d'aimant (24) lorsque le noyau du rotor (21) est vu dans la direction axiale,
lorsque l'aimant du rotor (22) est inséré dans le trou d'insertion d'aimant (24), l'une de la paire de saillies (27) fait face à un côté court de l'aimant du rotor (22) situé à une extrémité dans un sens longitudinal, et l'autre des saillies (27) fait face à un côté court de l'aimant du rotor (22) situé à l'autre extrémité dans le sens longitudinal, et
l'élément de positionnement (23) est situé uniquement entre le côté long de l'aimant du rotor (22) et la surface intérieure du trou d'insertion de l'aimant (24) lorsque l'élément de positionnement (23) est vu dans la direction axiale.

5. Rotor (2) selon la revendication 4, **caractérisé en ce que** :
la paire de saillies (27) est située aux deux côtés de l'élément de positionnement (23), et
lorsque l'élément de positionnement (23) est vu dans la direction axiale, dans la direction longitudinale de l'aimant de rotor (22), une extrémité de la couche de matériau de base (57) de l'élément de positionnement (23) est située plus vers l'intérieur par rapport à l'aimant de rotor (22) qu'une extrémité de l'aimant de rotor (22), et l'autre extrémité de la couche de matériau de base (57) de l'élément de positionnement (23) est située plus vers l'intérieur par rapport à l'aimant de rotor (22) que l'autre extrémité de l'aimant de rotor (22).

6. Moteur IPM (1) **caractérisé en ce qu'**il comprend
le rotor (2) selon l'une quelconque des revendications 1 à 5 ; et
un stator (3) comprenant une bobine de stator (36) et un noyau de stator (31).
